# EUROPEAN PATENT APPLICATION

(11) **EP 4 564 802 A1**
(43) Date of publication of application: **04.06.2025**
(21) Application number: 22952988.8
(22) Date of filing: 25.07.2022
(51) Int. Cl.: H04N 5/74, H04N 9/31

(54) **SIMULATION SYSTEM AND METHOD OF SIMULATION**

(71) Applicant: Kose Corporation, Tokyo 103-8251 (JP); Institute of Science Tokyo, Tokyo 152-8550 (JP)
(72) Inventor: ISHIZUKI, Nao, Tokyo 114-0005 (JP); KATO, Kaoru, Tokyo 114-0005 (JP); KAKIMOTO, Ryo, Tokyo 114-0005 (JP); TSUKIYAMA, Fumihiko, Tokyo 114-0005 (JP); WATANABE, Yoshihiro, Tokyo 152-8550 (JP)
(74) Representative: Alpspitz IP
(86) International application number: PCT/JP2022/028627
(87) International publication number: WO 2024/023889

(57) **Abstract**

Summary

[Problem] To provide a simulation system and the like with which glare at use time is not readily felt when a simulation is performed.

[Solution] According an embodiment of the present invention, provided is a simulation system that projects a video to the head of a living being. This simulation system comprises an image-capturing unit, an information processing unit, and a projection unit. The image-capturing unit is configured to successively capture images in time series, the captured images including the head. The information processing unit is configured to calculate prescribed information relating to the head and generate a video to be projected, on the basis of the captured images. The prescribed information includes the position, shape, and projected form of the head. The video to be projected has a base portion and one or more object portions. The one or more object portions include a portion that masks the eyes included in the head. The projection unit is configured to project the video generated by the information processing unit, in conformance with the position of the head, on the basis of the prescribed information. A configuration is adopted such that a duration from the time of a frame in which the image-capturing unit captures an image of the head until the time at which information processing corresponding to the frame is carried out and the projection unit projects the video to the head is 50 ms or less.

## Description

### BACKGROUND

The present disclosure relates to a simulation system and a simulation method.

### RELATED ART

In recent years, a technology for projecting projection images onto three-dimensional objects, which is also called as "projection mapping", has been attracting attention. Also, as an application for such a technology, a technology for projecting makeup images onto human faces or the like has been developed. As related technologies, the arts disclosed in Patent Documents 1 and 2 are present.

### PRIOR ART DOCUMENTS

### Patent document

[Patent Document 1] JP 2018-195996 A
[Patent document 2] JP 2022-45944 A

### SUMMARY

### Problems to be Solved by Invention

However, the inventors of the present disclosure have examined the above-described projection technologies, and have found that light of a projection equipment used in such technologies sometimes cause glare.

In light of the above-mentioned circumstances, the present disclosure provides a simulation system and the like, which is less likely to cause glare when being used for simulation.

### Means for Solving Problems

According to one aspect of the present disclosure, a simulation system that projects a projection image onto a head of a living being can be provided. This simulation system includes an imager, an information processing unit and a projector. The imager is configured to consecutively obtain captured images that contain a head in a time series. The information processing unit is configured to calculate predetermined information related to the head based on the captured image, and to generate a projection image to be projected. The predetermined information includes a position, a shape and a projected aspect of the head. The projection image to be projected includes a base part and one or more object parts. The one or more object parts include a part masking an eye area that is included in the head. The projector is configured to project the projection image that is generated by the information processing unit in accordance with the position of the head, based on the predetermined information. A time period from a time of a frame when the imager images the head to a time when the projector projects the projection image onto the head, during which the information processing corresponding to this frame is performed, is 50 ms or less.

According to the above-described aspect, the simulation system that is less likely to cause glare when being used for simulation can be provided.

### BRIEF DESCRIPTION OF DRAWINGS

[FIG. 1] FIG. 1 is a configuration diagram representing a simulation system 1 according to a first embodiment.
[FIG. 2] FIG. 2 is a block diagram illustrating a hardware configuration of an information processing unit 3.
[FIG. 3] FIG. 3 is a functional block diagram illustrating a function of a control unit 33 in the information processing unit 3.
[FIG. 4] FIG. 4 is a block diagram illustrating a hardware configuration of a tablet terminal (makeup input device 6).
[FIG. 5] FIG. 5 is an activity diagram for explaining a simulation method of the first embodiment.
[FIG. 6] FIG. 6 is a conceptual diagram for explaining a projection image generated in an information processing step.
[FIG. 7] FIG. 7 illustrates an example of a display screen displayed on the tablet terminal (makeup input device 6).
[FIG. 8] FIG. 8 is a configuration diagram representing a first modified example of the simulation system 1.
[FIG. 9] FIG. 9 is a configuration diagram representing a second modified example of the simulation system 1.

### DETAILED DESCRIPTION

Hereinafter, embodiments of the present disclosure will be described with reference to the drawings. Various features shown below in embodiments can be combined with each other.

A program for realizing a software in the present embodiment may be provided as a non-transitory computer readable medium that can be read by a computer, may be provided for download from an external server, or may be provided in such a manner that the program can be activated on an external computer to realize functions thereof on a client terminal (so-called cloud computing).

In the present embodiment, the "unit" may include, for instance, a combination of hardware resources implemented by a circuit in a broad sense and information processing of software that can be concretely realized by these hardware resources. Further, various kinds of information is performed in the present embodiment, and the information can be represented by, for instance, physical values of signal values representing voltage and current, high and low signal values as a set of binary bits consisting of 0 or 1, or quantum superposition (so-called qubits), and communication/computation can be executed on a circuit in a broad sense.

Further, the circuit in a broad sense is a circuit realized by combining at least an appropriate number of a circuit, a circuitry, a processor, a memory, or the like. In other words, it is a circuit includes application specific integrated circuit (ASIC), programmable logic device (e.g., simple programmable logic device (SPLD), complex programmable logic device (CPLD), field programmable gate array (FPGA)), or the like.

### [First embodiment]

Firstly, a simulation system of a first embodiment will be explained. That is, the simulation system of the first embodiment is as described below.

A simulation system configured to project a projection image onto a head of a living being,
the simulation system comprising:
an imager configured to consecutively obtain captured images that contain the head in a time series;
an information processing unit configured to calculate predetermined information related to the head based on the captured image, and to generate a projection image to be projected, wherein
   the predetermined information includes a position, a shape and a projected aspect of the head,
   the projection image to be projected includes a base part and one or more object parts, and
   the one or more object parts include a part masking an eye area that is included in the head; and
a projector configured to project the projection image generated by the information processing unit in accordance with the position of the head, based on the predetermined information, wherein
a time period from a time of a frame when the imager images the head to a time when the projector projects the projection image onto the head, during which the information processing corresponding to this frame is performed, is 50 ms or less.

Hereinafter, the configuration and applications of this simulation system will be explained.

### 1. Hardware configuration

This section provides an explanation of a hardware configuration of the first embodiment.

### 1.1 Simulation system 1

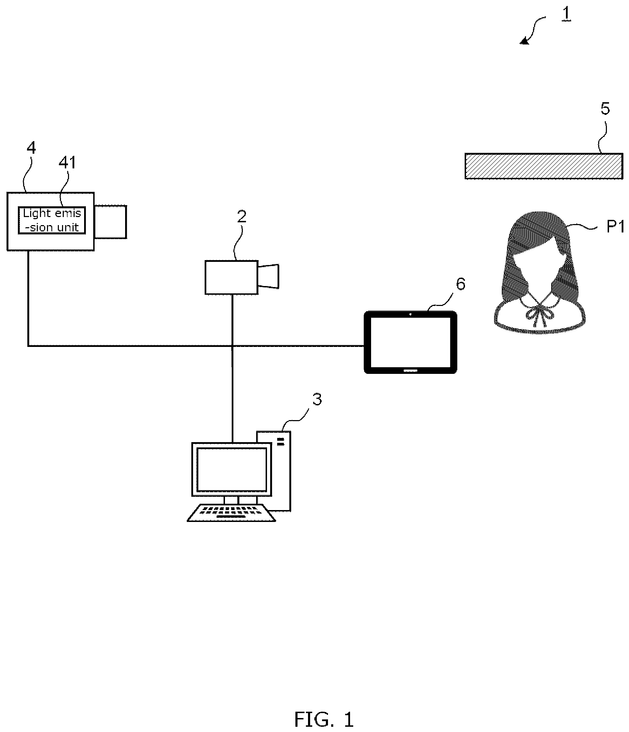

FIG. 1 is a configuration diagram representing a simulation system 1 according to the first embodiment. The simulation system 1 projects a projection image onto a head of a living being, and FIG. 1 illustrates a system that projects a projection image onto a head of a person P1. Incidentally, this simulation system 1 can be applied also to animals and the like other than humans.

This simulation system 1 can be used for various purposes, but is typically used to simulate makeup onto a head. Incidentally, in the present specification, "makeup" includes not only makeup applied to various parts of a face such as foundation, highlighters, shadings, eyeshadows, eye liners, eyebrows, mascara, blusher and lipsticks, but also coloring applied to hair. The simulation system 1 may be used not only for makeup onto a head, but also for simulating accessories (ornaments) onto a head, simulating hair styles, simulating increase and decrease in three-dimensional structures such as pores, wrinkles and the like, simulating increase and decrease in uneven skin tone such as acnes and blemishes, simulating cosmetic surgery, visualizing arrangements of subcutaneous tissues, and the like. Further, the part to be projected may also include parts other than a head, and for example, makeup is simulated onto the head as mentioned above, and projection may be simultaneously performed onto a body, hands, legs and the like such that clothes for suiting this makeup can be simulated.

The simulation system 1 includes an imager 2, an information processing unit 3 and a projector 4, which are connected to each other via a circuit. Incidentally, FIG. 1 illustrates an aspect that the simulation system 1 includes, in addition to the components described above, an illuminance adjustment unit 5 and a makeup input device 6, which are not essential components in the present embodiment. These components will be further described below.

### 1.2 Imager 2

The imager 2 is configured to consecutively obtain captured images that include a head in a time series. The imager 2 is, for example, a camera (which can adopt visible light, infrared light or the like as appropriate) configured to be able to acquire external information as an image. Such a camera with a high operating frequency (frame rate), which is called high-speed vision, is preferably adopted. The frame rate (operating frequency) of the camera is, for example, 300 fps or more, preferably 400 fps or more, and further preferably 500 fps or more or 1000 fps or more. Further, the operating frequency of the camera may be, for example, 100 fps, 125 fps, 150 fps, 175 fps, 200 fps, 225 fps, 250 fps, 275 fps, 300 fps, 325 fps, 350 fps, 375 fps, 400 fps, 425 fps, 450 fps, 475 fps, 500 fps, 525 fps, 550 fps, 575 fps, 600 fps, 625 fps, 650 fps, 675 fps, 700 fps, 725 fps, 750 fps, 775 fps, 800 fps, 825 fps, 850 fps, 875 fps, 900 fps, 925 fps, 950 fps, 975 fps, 1000 fps, 1025 fps, 1050 fps, 1075 fps, 1100 fps, 1125 fps, 1150 fps, 1175 fps, 1200 fps, 1225 fps, 1250 fps, 1275 fps, 1300 fps, 1325 fps, 1350 fps, 1375 fps, 1400 fps, 1425 fps, 1450 fps, 1475 fps, 1500 fps, 1525 fps, 1550 fps, 1575 fps, 1600 fps, 1625 fps, 1650 fps, 1675 fps, 1700 fps, 1725 fps, 1750 fps, 1775 fps, 1800 fps, 1825 fps, 1850 fps, 1875 fps, 1900 fps, 1925 fps, 1950 fps, 1975 fps or 2000 fps, and may also be in a range between any two of the values exemplified above here.

In addition, the imager 2 is not limited to a camera, and may be a measurement sensor or the like which can acquire three-dimensional shapes, or multiple sensors with different functions. Incidentally, a view angle position in the projector 4 described below and a view angle position in the imager 2 are assumed to be consistent due to prior calibration. Also, the imager 2 may be implemented as a calibration-free system by employing a coaxial optical system, which is not shown in the figure.

### 1.3 Information processing unit 3

The information processing unit 3 is configured to calculate predetermined information related to the head based on the captured image, and to generate a projection image to be projected.

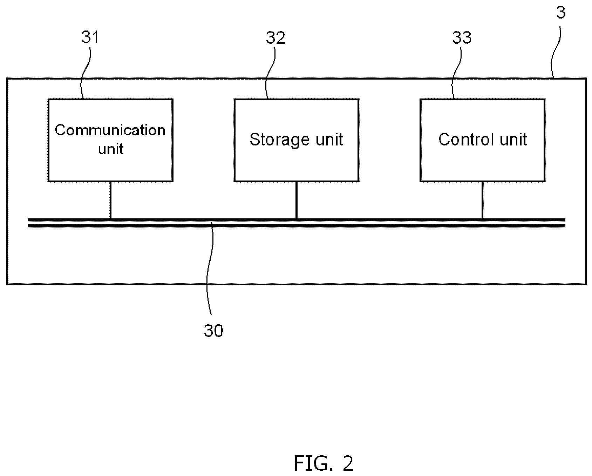

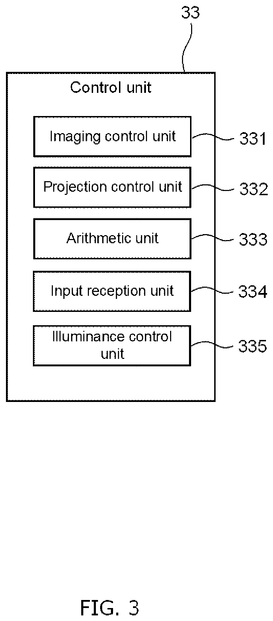

FIG. 2 is a block diagram illustrating a hardware configuration of the information processing unit 3. FIG. 3 is a functional block diagram illustrating a function of a control unit 33 in the information processing unit 3. The information processing unit 3 includes a communication unit 31, a storage unit 32 and a control unit 33, and these components are electrically connected to each other via the communication bus 30 inside the information processing unit 3. Particularly as the control unit 33, the information processing unit 3 includes an image imaging control unit 331, a projection control unit 332, an arithmetic unit 333, an input reception unit 334 and an illuminance control unit 335. Each component will be further described below.

### <Communication unit 31>

The communication unit 31 is preferably a wired communication means such as USB, IEEE1394, Thunderbolt (registered trademark), wired LAN network communication and the like, and may also include wireless LAN network communication, mobile communication such as LTE/3G, Bluetooth (registered trademark) communication and the like as necessary. In other words, the communication unit 31 is preferably implemented as a set of a plurality of these communication means.

For example, the communication unit 31 is preferably configured to be able to communicate with the imager 2, the projector 4 and the like in accordance with predetermined high-speed communication standards. Specifically, the communication unit 31 is configured to be able to transmit an image of projection light that is emitted by a light emission unit 41 of the projector 4. In addition, the communication unit 31 is configured to be able to receive the captured image acquired by the imager 2.

### <Storage unit 32>

The storage unit 32 stores various information defined by the above description. The storage unit 32 can be implemented, for example, as a storage device such as a solid state drive (SSD) or as a memory such as a random access memory (RAM) that stores temporarily necessary information (arguments, arrays or the like) for program arithmetic operations. Also, the storage unit 32 may be a combination of them.

In particular, the storage unit 32 stores imaging information that is acquired by the imager 2 and received by the communication unit 31. In addition, the storage unit 32 stores a sensor control program for controlling the imaging control unit 331 in the control unit 33 to receive imaging information from the imager 2. The storage unit 32 stores an emission control program for the projection control unit 332 in the control unit 33 to control the light emission unit 41 to emit light at a predetermined operating frequency.

In addition, the storage unit 32 also stores various programs and the like related to the information processing unit 3, which are executed by the arithmetic unit 333 in the control unit 33.

### <Control unit 33>

The control unit 33 processes and controls overall operation related to the information processing unit 3. The control unit 33 is, for example, an unshown central processing unit (CPU). The control unit 33 realizes various functions related to the information processing unit 3 by reading out the predetermined program stored in the storage unit 32. Specifically, the various functions correspond to a imaging control function, a projection control function, an arithmetic operation function, an input receiving function, an illuminance control function and the like. That is, the information processing by software (stored in the storage unit 32) is specifically realized by hardware (the control unit 33), thereby being able to be executed by the imaging control unit 331, the projection control unit 332, the arithmetic unit 333, the input reception unit 334 and the illuminance control unit 335. In other words, the program can allow a computer to function as each unit of the information processing unit 3.

Incidentally, a simplex of the control unit 33 is illustrated to be single in FIG. 2, but the actual configuration is not limited to this, and each function may be implemented to include a plurality of the control units 33. Also, combinations of these configurations may be adopted. Hereinafter, various functions that can be realized by the control unit 33 will be described below in more detail.

### (Imaging control unit 331)

The imaging control unit 331 is an unit of which the information processing by the software (stored in the storage unit 32) is specifically realized by the hardware (control unit 33). The imaging control unit 331 controls the reception of the imaging information and the like from the imager 2. In addition, the imaging control unit 331 may also adjust the operating frequency of the imager 2, and may generate an three-dimensional projection image model by using the imaging information acquired by the imager 2.

### (Projection control unit 332)

The projection control unit 332 is an unit of which the information processing by the software (stored in the storage unit 32) is specifically realized by the hardware (control unit 33). The projection control unit 332 is configured to be able to control the light emission unit 41 in the projector 4 to emit light at a predetermined operating frequency. In other words, the projection control unit 332 generates a control signal for controlling the light emission unit 41, and this control signal is transmitted to the light emission unit 41 in the projector 4 via the communication unit 31. Then, the light emission unit 41 emits light based on the control signal to project projection light to an object (person P1).

### (Arithmetic unit 333)

The arithmetic unit 333 is an unit of which the information processing by the software (stored in the storage unit 32) is specifically realized by the hardware (control unit 33). The arithmetic unit 333 is configured to perform various arithmetic operations such as, for example, image processing and conversion with respect to a projection image. They are not limited particularly, and can be performed as appropriate.

### (Input reception unit 334)

The input reception unit 334 is an unit of which the information processing by the software (stored in the storage unit 32) is specifically realized by the hardware (control unit 33). The input reception unit 334 is configured to be able to receive, for example, contents input into the makeup input device 6 described below. They are not limited particularly, and can be performed as appropriate.

### (Illuminance control unit 335)

The illuminance control unit 335 is an unit of which the information processing by the software (stored in the storage unit 32) is specifically realized by the hardware (control unit 33). The illuminance control unit 335 is configured to be able to control illuminance at an existing position of the person P1 as necessary. That is, the illuminance adjustment unit 335 may be configured to adjust output of light that is projected from the projector 4, or may also be configured such that, if the illuminance adjustment unit 5 is electrically connected to the information processing unit 3, the illuminance adjustment unit 5 can be operated appropriately by the function of the illuminance control unit 335.

### 1.4 Projector 4

The projector 4 is configured to project the projection image generated by the information processing unit 3 in accordance with the position of the head. More specifically, the projector 4 typically includes the light emission unit 41, and is configured such that the light emission unit 41 emits light so as to be able to project projection light containing the image onto the projection object (person P1). Although outer appearance and an internal configuration of the projector 4 are not particularly limited, so-called a high speed projection equipment with a high refresh rate (operating frequency) is preferably adopted as the projector 4. The operating frequency of the projection equipment is, for example, 300 Hz or more, preferably 400 Hz or more, and further preferably 500 Hz or more or 1000 Hz or more. Further, the operating frequency of the projection equipment may also be, for example, 100 Hz, 125 Hz, 150 Hz, 175 Hz, 200 Hz, 225 Hz, 250 Hz, 275 Hz, 300 Hz, 325 Hz, 350 Hz, 375 Hz, 400 Hz, 425 Hz, 450 Hz, 475 Hz, 500 Hz, 525 Hz, 550 Hz, 575 Hz, 600 Hz, 625 Hz, 650 Hz, 675 Hz, 700 Hz, 725 Hz, 750 Hz, 775 Hz, 800 Hz, 825 Hz, 850 Hz, 875 Hz, 900 Hz, 925 Hz, 950 Hz, 975 Hz, 1000 Hz, 1025 Hz, 1050 Hz, 1075 Hz, 1100 Hz, 1125 Hz, 1150 Hz, 1175 Hz, 1200 Hz, 1225 Hz, 1250 Hz, 1275 Hz, 1300 Hz, 1325 Hz, 1350 Hz, 1375 Hz, 1400 Hz, 1425 Hz, 1450 Hz, 1475 Hz, 1500 Hz, 1525 Hz, 1550 Hz, 1575 Hz, 1600 Hz, 1625 Hz, 1650 Hz, 1675 Hz, 1700 Hz, 1725 Hz, 1750 Hz, 1775 Hz, 1800 Hz, 1825 Hz, 1850 Hz, 1875 Hz, 1900 Hz, 1925 Hz, 1950 Hz, 1975 Hz or 2000 Hz, and may also be in a range between any two of the values exemplified above here.

Moreover, the projector 4 may be configured to be able to adjust an optical axis with a mirror or the like in accordance with movement of the head. Thereby, projection is facilitated not only from a front but also from both sides, a top and a bottom of the head. In addition, even if the position of the person P1 is moved, projection can be easily performed adjusting to a moved position appropriately.

### 1.5 Illuminance adjustment unit 5

The illuminance adjustment unit 5 is used to adjust illuminance of the ambient light at the existing position of the projection object (person P1). This illuminance adjustment unit 5 is typically configured such that illuminance of the ambient light at the existing position of the head is adjusted by a member that is arranged around the head of the projection object. Herein, the adjustment of the illuminance may be achieved by shielding from light that is incident from a light source around the projection object. In addition, the adjustment of the illuminance may also be achieved by the desired ambient light, which is resulted from light emission by the illuminance adjustment unit 5. Incidentally, FIG. 1 shows an aspect in which the illuminance adjustment unit 5 exists independently, but, if this illuminance adjustment unit 5 includes an electrical component, the illuminance adjustment unit 5 may be connected to the information processing unit 3 and the like via a circuit or the like.

### 1.6 Makeup input device 6

The makeup input device 6 is used to input details of makeup to be simulated. The makeup input device 6 is typically a portable terminal, and assumed examples thereof include a tablet terminal, a smart phone and the like, but a PC (Personal Computer) or the like may also be used, and details thereof are not limited. In addition, the makeup input device 6 may be the same terminal as the information processing unit 3, and the predetermined information processing may be performed according to input into the information processing unit 3.

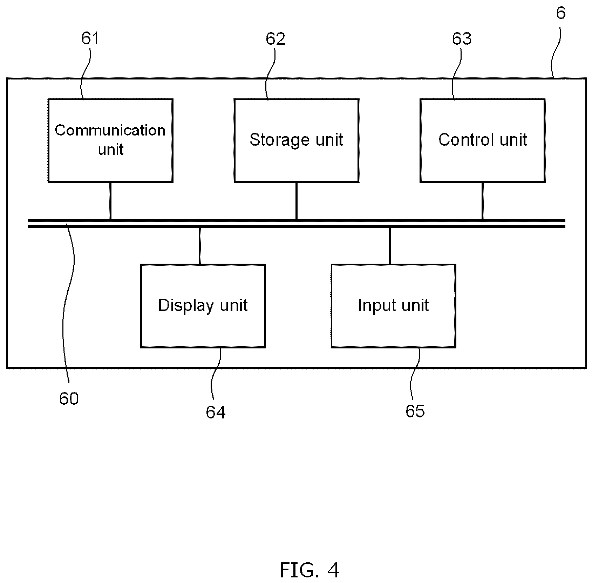

Hereinafter, a hardware configuration of the makeup input device 6 will be described, assuming that the makeup input device 6 is a tablet terminal. FIG. 4 is a block diagram illustrating the hardware configuration of the tablet terminal (makeup input device 6).

The tablet terminal (makeup input device 6) includes a communication unit 61, a storage unit 62, a control unit 63, a display unit 64 and an input unit 65, and these components are electrically connected to each other via a communication bus 60 inside the tablet terminal (makeup input device 6). Descriptions of the communication unit 61, the storage unit 62 and the control unit 63 will be omitted, because they are substantially the same as those of the communication unit 31, the storage unit 32 and the control unit 33 in the information processing unit 3 described above.

The display unit 64 may be included in, for example, a housing of the tablet terminal (makeup input device 6), or may be externally attached thereto. The display unit 64 displays a screen of a graphical user interface (GUI) that can be operated by a user. This is preferably performed by using, for example, display devices such as a CRT display, a liquid crystal display, an organic electroluminescent display and a plasma display depending on the kind of the terminal. Herein, the display unit 64 will be described as being included in the housing of the tablet terminal (makeup input device 6).

The input unit 65 may be included in the housing of the tablet terminal (makeup input device 6), or may be externally attached thereto. For example, the input unit 65 may be integrated with the display unit 64 to be implemented as a touch panel. If such a touch panel is implemented, the user can input tap operation, swipe operation and the like. Needless to say, a switch button, a mouse, a QWERTY keyboard and the like may be adopted instead of the touch panel. That is, the input unit 65 receives the operation input made by the user. The input is transferred as a command signal to the control unit 63 via the communication bus 60, and the control unit 63 can execute predetermined control or arithmetic operations as necessary.

Incidentally, images to be displayed on the display unit 64 of the makeup input device 6 and contents that can be input via the images will be explained below.

### 2. Simulation method

In this section, each step of a simulation method using the above-described simulation system 1 will be described. That is, the simulation method of the first embodiment includes an imaging step, an information processing step and a projection step, and each of these steps will be explained with reference to an activity diagram and the like in this section.

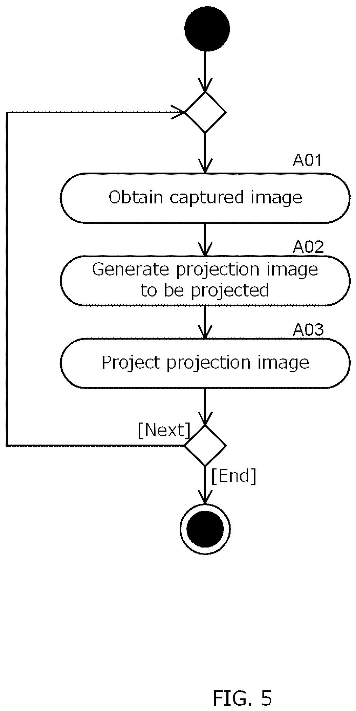

FIG. 5 is the activity diagram for explaining the simulation method of the first embodiment.

Firstly, in Activity A01, captured images that contain the head is obtained consecutively in a time series (imaging step). This imaging step can be achieved by the imager 2 imaging the head of the person P1 consecutively in a time series.

In Activity A02, based on the captured images obtained in the imaging step, predetermined information related to the head is calculated, and an projection image to be projected is generated (information processing step). Herein, this predetermined information includes a position, a shape and a projected aspect of the head, and the projection image to be projected includes a base part and one or more object parts, and the one or more object parts include a part masking an eye area that is included in the head.

For grasping the position of the head, a learned model that has learned, in advance, positional relations of parts, which are included in the head and can be feature points, is used. These feature points typically correspond to eyes, nose, mouth, ears and the like

By inputting the captured image obtained in the imaging step into this learned model, each of the feature points included in the captured image is calculated. Also, rule-based algorithm such as template matching may be adopted instead of the learned model.

This information processing step is typically executed by the information processing unit 3 performing a predetermined arithmetic operation and the like.

Herein, the projection image generated in this information processing step will be explained with reference to FIG.

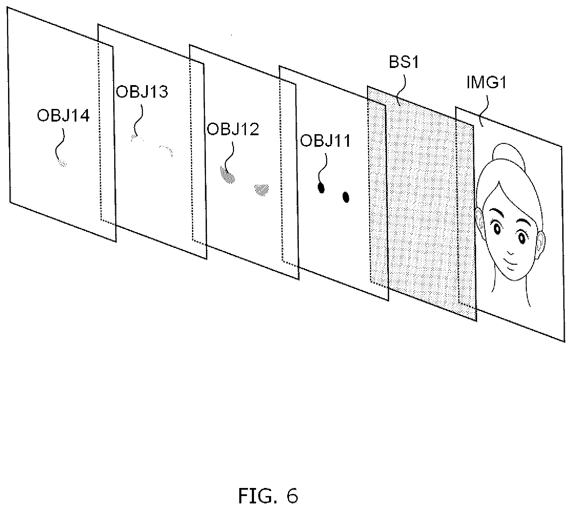

6. FIG. 6 is a conceptual diagram for explaining the projection image generated in the information processing step.

That is, a projection image IMG1 in FIG. 6 corresponds to the projection image generated in the information processing step, and typically, processing for combining a base part BS1 with object parts OBJ11 to OBJ14 is performed for generating this projection image IMG1.

In the example shown in FIG. 6, the base part BS1 is a part which constitutes a color of skin (base color) on the head that is subjected to the projection, but the color of the "base part" is not necessarily limited to a single color. That is, the color that constitutes the base part may also be colors that constitute gradations or colors with patterns in part.

However, in a discussion of a relation between the illuminance of the ambient light and illuminance of the base part as described below, the illuminance of this base part can be defined as a color which is projected onto the largest area among the colors projected onto a face in the head of the person P1. Further, in the discussion of the relation of the illuminance, the illuminance of the base part only denotes illuminance of the light irradiated from the projector 4. A value of the illuminance of this base part can be sought by reducing the illuminance of the ambient light from the illuminance of the base part when being irradiated with the projection light projected from the projector 4 and the ambient light at the same time.

The object part OBJ11 is a part masking the eye area included in the head, the object part OBJ12 is a part that represents a shape of blusher, the object part OBJ13 is a part that represents a shape of eye makeup, and the object part OBJ14 is a part that represents a shape of lipstick.

Incidentally, such a projection image IMG1 is generated by calculating the predetermined information related to the head based on the captured image obtained in the imaging step, and specifically, this predetermined information includes the position, the shape and the projected aspect of the head. In other words, based on facial parts (eyes, eyelids, cheeks, lips and the like) existing in the head that is imaged in the imaging step, the positional relations of the various objects in the above-described projection image IMG1 can be adjusted (optimized).

Incidentally, the projection image IMG1 in FIG. 6 has provided a concept that the respective object parts are separated from each other, but composition of the projection image IMG1 is not limited to this. For example, for composing the projection image IMG1, contents that the respective object parts are connected in advance may be combined with the base part BS1, and alternatively, the base part BS1 which has been combined with the respective object parts from the beginning may be adopted as the projection image IMG1.

In addition, among the various object parts described above, the part masking the eye area (object part OBJ11) included in the head has a function of moderating glare of the projection light entering the eyes, but this object part OBJ11 may mask an area that includes not only pupils (irises) but also white of the eyes (entire eyes). Incidentally, this part masking the eye area (object part OBJ11) included in the head usually has a color that is darker than the color constituting the base part BS1.

In addition, such an information processing step is typically executed by the information processing unit 3, but the information processing unit 3 may be configured to output the contents of the one or more object parts based on the input into the makeup input device 6.

Such an aspect of outputting the contents of the object parts based on the input into the makeup input device 6 will be explained with reference to FIG.

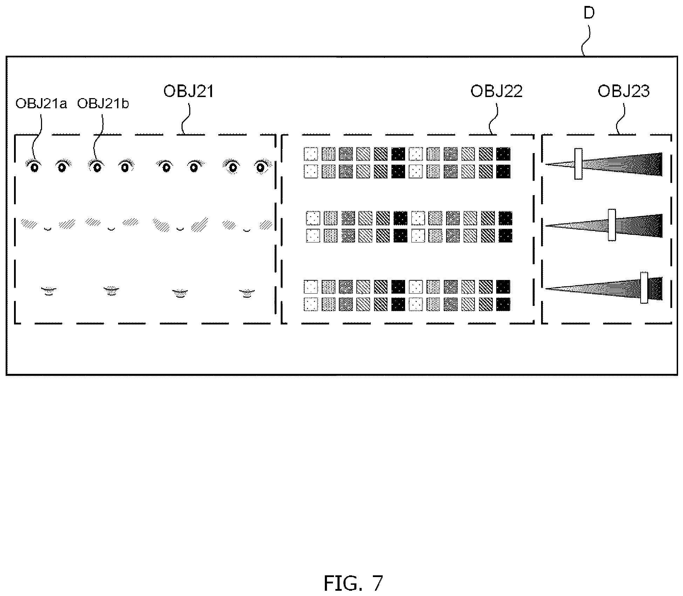

7. FIG. 7 illustrates an example of a display screen displayed on the tablet terminal (makeup input device 6).

In the display screen D of FIG. 7, an object OBJ21 from which various shapes of the makeup can be selected, an object OBJ22 from which various colors of the makeup can be selected, and an object OBJ23 from which various intensities of the makeup can be adjusted are shown. Incidentally, in the actual operation, when pressing an object OBJ21a, a corresponding shape is selected, and when pressing an object OBJ21b, a different shape is selected, but for convenience, the above-described object OBJ21, object OBJ22 and object OBJ23 are respectively assumed as aggregates of the same kind of the objects in following explanation.

That is, a person (who is typically the person P1, but may be an operator other than the person P), who touches the display screen D displayed on the display unit 64 of the makeup input device 6, selects a shape of makeup desired to be applied to the person P1 based on the object OBJ21, and selects a color of the makeup desired to be applied to the person P1 based on the object OBJ22. Incidentally, in the object OBJ22, a color palette from which the various colors can be selected is shown, but objects of the different shapes from which the various colors can be selected may be disposed instead. In addition, the intensity of each makeup can be selected based on a slide operation for a bar in the object OBJ23.

The contents input into the makeup input device 6 as described above are received by the input reception unit 334 of the information processing unit 3. Further, the arithmetic unit 333 of the information processing unit 3 performs a predetermined arithmetic operation in accordance with these received contents, and generates a projection image to be projected. Incidentally, the contents to be input into the makeup input device 6 are not limited to those in the aspect shown in FIG. 7, and may be indications of mood or impressions of the makeup such as "glamorous", "soft and airy" and the like. In addition, contents representing celebrities such as actors and idols may be input as the input contents, and an object part associated with these celebrities may be able to be output.

Further, for performing such an information processing step, the information processing unit 3 may also be configured to calculate the predetermined information, by using a predetermined area centered around the position of the head calculated from a previous frame of the captured image that immediately precedes a present frame.

That is, in such a configuration, the position of the head is calculated in the previous frame, and based on this area around the head, the predetermined information is calculated and the projection image to be projected is generated. In other words, the arithmetic unit 333 does not perform the information processing with respect to the entire frame of the captured image, but performs the information processing with respect only to an area that is a part of the frame. The processing in such a manner can contribute to improvement of speed of the information processing.

In addition, when the information processing step is performed, the information processing unit 3 may also adjust a projection color of the projection image based on a reflection property of a specific site that exists in the head. Incidentally, this specific site corresponds to skin, lips, hair or the like existing on the head. Further, the reflection property of this specific site may be sought from a database that is acquired in advance, or may be measured on the spot. In the case of measuring the reflection property on the spot, the imager 2 may measure the reflection property of the specific site that exists on the head. Whereas, the measurement of the reflection property may be executed by a component other than the imager 2. For example, a predetermined sensor (not shown in FIG. 1) connected to the information processing unit 3 may detect the reflection property of the specific site that exists on the head, and the information processing unit 3 may adjust the contents of the projection image to be projected, based on the detected reflection property.

For more typical example, the information processing unit 3 may be configured to detect an error from a target color in the simulation, depending on the reflection property of the specific site that exists on the head, and may adjust projection data, a degree of the output of the projector 4 and the like based on this detected error.

Returning to the description of the activity diagram of FIG.
5. In subsequent Activity A03, the projection image generated in the information processing step is projected in accordance with the position of the head, based on the predetermined information (projection step). This projection step is typically executed by the projector 4, and by such execution, the projector 4 can project the projection image matching the head that is the projection object, and can consequently perform the simulation of makeup and the like.

Incidentally, in this projection step, an optical axis may be adjusted by a mirror or the like in accordance with movement of the head.

Thereafter, the same processing (Activities A01, A02 and A03) is executed every other frame. Thereby, even if the person P1 is moved, the projection image follows this movement and a desired image can be projected onto the head ([Next] route in FIG. 5). Further, for terminating the simulation, at least one of the functions of the imager 2, the information processing unit 3 and the projector 4 is to be stopped ([End] route in FIG. 5).

Incidentally, these activities does not necessarily have to be repeated every other frame, but can be performed every several frames.

Herein, the simulation method of the first embodiment has following features.

That is, a time period from a time of a frame when imaging the head in the imaging step to a time when projecting the projection image onto the head in the projection step, during which the information processing corresponding to this frame is performed (also called as "latency") is 50 ms or less.

Incidentally, the above-described latency is preferably 45 ms or less, more preferably 40 ms or less, further preferably 35 ms or less, still further preferably 30 ms or less, particularly preferably 25 ms or less, especially preferably 20 ms or less, especially preferably 15 ms or less, even more preferably 10 ms or less, and extremely preferably 5 ms or less.

Such reduction in latency time may be achieved by improvement of the operating frequencies of the imager 2 and the projector 4 and improvement of information processing capability of the information processing unit 3. In addition, as the example of the information processing step described above, the predetermined information is calculated using the predetermined area centered around the position of the head calculated from the previous frame of the captured image that immediately precedes the present frame, thereby contributing to such reduction in latency as well.

Incidentally, a lower limit of the latency is not limited particularly, but an example thereof is 0.1 ms or more.

In addition, the simulation method of the first embodiment may have following features.

That is, where the illuminance of the ambient light at the existing position of the head is denoted by I₁ [lux], and the illuminance of the base part in the projection image to be projected is denoted by I₂ [lux], I₂ / I₁ may be 1.5 or more and 30 or less.

Upon investigation by the inventors of the present disclosure, it was found that, in the case where the ambient light at the existing position of the head has extremely low illuminance, the projection image to be projected is likely to be cause glare, and in the case where the ambient light at the existing position of the head has extremely high illuminance, a width of a color gamut that can be expressed tends to be limited. Therefore, a ratio between the illuminance of the ambient light at the existing position of the head and the illuminance of the base part of the projection image to be projected is preferably set within an appropriate range. By setting the ratio within such a range, the projection image is less likely to cause glare, and can secure the width of the color gamut that can be expressed.

Incidentally, in the present specification, "the ambient light at the existing position of the head" is defined as entire light reaching the head excluding a portion of the light projected directly onto the head by the projector 4. Herein, this ambient light can typically include natural light such as sunlight and light emitted from flames, artificial light sources such as light emitted from fluorescent lamps (daylight color, daywhite color, white and the like), light bulbs and optical devices except for the projector 4 (LED, EL, laser and the like), and light indirectly projected onto the head by the projector 4. Further, this ambient light may be adjusted in color tone and the like through a color balance adjustment filter or the like. Furthermore, the light indirectly projected onto the head can typically include light that is reflected by a body part other than the head and reaches the head, and light that is reflected by a wall in a space in which the simulation is performed and reaches the head. Therefore, the simulation system 1 of this embodiment can provide a place for makeup at daytime and nighttime for various events and occasions (studio, theater stages, spectating (of sports or the like), meeting, social dining, anti-aging and the like) that can be assumed, by the setting of the kind and the illuminance of the light source of the ambient light. In addition, the "light reaching the head" denotes light irradiated to an area enclosed by a curved line that connects a hairline of the fringe, chin and ears on the face.

In the light of reducing glare, light from a light source that emits the ambient light is more preferably projected as indirect light that is reflected by a wall or the like, than projected directly onto the face of the person P1. Further, it is more preferable that the projector 4 is directly illuminated by a light source which emits the ambient light.

The above-described I₂ / I₁ is preferably 3 or more, more preferably 5 or more, further preferably 7 or more, and particularly preferably 10 or more. Moreover, I₂ / I₁ is preferably 27 or less, more preferably 25 or less, further preferably 22 or less, and particularly preferably 20 or less.

Table 1 below summarizes results of screening I₂ / I₁ values by using the simulation system 1 shown in FIG.
1. As shown in Table 1, by setting the values of I₂ / I₁ in the range, glare is less likely to be caused, and a wide range of the color gamut can be expressed.

Incidentally, in the results shown in Table 1, white LEDs were used as the ambient light. More specifically, evaluation was performed by adjusting output of the white LEDs, while fixing I₂ at 500 [lux] and below-described I₃ at 0 [lux].

In addition, the "No glare" in Table 1 is evaluated in accordance with following criteria.

That is, the projection was provided to a panel of 10 people each for 10 minutes, and then, "No glare" was evaluated in accordance with the number of the people who responded that they felt strain in their eyes. The specific evaluation criteria are as follows. A: 1 person or less
B: 2 people or more and 4 people or less
C: 5 people or more

Incidentally, the "Width of expressable color gamut" in Table 1 is evaluated in accordance with following criteria.

That is, 30 colors were selected from commercially available eyeshadows. The selected 30 colors of the eyeshadows were reproduced by the simulation system1 and projected onto the panel, and evaluation was performed by visual observation by five cosmetic evaluation professional evaluators. The "Width of expressable color gamut" was evaluated in accordance with the number of colors that were judged to be equivalent to the real colors by the 3 or more cosmetic evaluation professional evaluators. The specific evaluation criteria are as follows.
A: 25 or more colors
B: 20 colors or more and 24 colors or less
C: 15 colors or more and 19 colors or less
D: 14 colors or less

**[Table 1]**

| | Example A1 | Example A2 | Example A3 | Example A4 | Example A5 | Example A6 | Example A7 | Example A8 |
|---|---|---|---|---|---|---|---|---|
| I₂/ I₁ | 0.7 | 1.5 | 5 | 10 | 20 | 30 | 40 | 50 |
| No glare | A | A | A | A | A | B | c | C |
| Width of expressable color gamut | D | B | A | A | A | A | A | A |

Further, I₁ is preferably 5 or more, more preferably 8 or more, further preferably 10 or more, still further preferably 20 or more, and particularly preferably 30 or more. On the other hand, I₁ is preferably 500 or less, more preferably 400 or less, further preferably 300 or less, still further preferably 250 or less, and particularly preferably 200 or less.

Setting the illuminance of the ambient light at the existing position of the head within such a range brings advantages that the color gamut of the projection light can be secured easily, natural makeup can be realized easily, and the like.

Table 2 below summarizes results of screening the values of I₁ by using the simulation system shown in FIG.
1. As shown in Table 2, setting the value of I₁ within the range brings advantages that glare can be reduced, the color gamut of the projection light can be secured easily, natural makeup can be realized easily, and the like.

Incidentally, in the results shown in Table 2, white LEDs were used as the ambient light, and evaluation was performed by adjusting output of the white LEDs, while fixing I₂ / I₁ at 10 [lux] and below-described I₃ at 0 [lux].

In addition, the "Width of expressable color gamut" in Table 2 was evaluated in accordance with the same criteria as those in Table 1.

Incidentally, "Naturalness" in Table 2 is evaluated in accordance with following criteria.

That is, eyeshadows, blushers and lipsticks were projected onto the panel, which was evaluated by visual observation by the five cosmetic evaluation professional evaluators. The "Naturalness" was evaluated in accordance with the number of the cosmetic evaluation professional evaluators who answered to be "natural" comparing with actual makeup. The specific evaluation criteria are as follows. A: 4 people or more
B: 2 people or more and 3 people or less
C: 1 person or less

**[Table 2]**

| | Example B1 | Example B2 | Example B3 | Example B4 | Example B5 | Example BE | Example B7 | Example B8 | Example B9 | Example B10 |
|---|---|---|---|---|---|---|---|---|---|---|
| I₁ | 2 | 5 | 15 | 30 | 50 | 100 | 200 | 300 | 500 | 700 |
| Width of expressable color gamut | A | A | A | A | A | A | A | B | B | D |
| Naturalness | C | B | B | A | A | A | A | A | A | A |

In addition, where illuminance of an area corresponding to a pupil part in the image projected by the projector 4 is denoted by I₃ [lux], I₃ / I₁ is preferably 10 or less, more preferably 5 or less, and further preferably 3 or less. That is, by setting the illuminance of the area corresponding to the pupil part to be relatively lower than the illuminance of the ambient light, glare can be reduced more easily.

Incidentally, the illuminance of the area corresponding to the pupil part can be sought by measuring illuminance of a center of a pupil (iris).

Further, a lower limit of the value of I₃ / I₁ is not particularly limited, but is 0.01 or more as an example, and can also be set at 0.

Table 3 below summarizes results of screening I₃ / I₁ values by using the simulation system 1 shown in FIG.
1. As shown in Table 3, by setting the value of I₃ / I₁ appropriately, glare can be reduced more easily.

Incidentally, in the results shown in Table 3, evaluation was performed by adjusting the illuminance of the area corresponding to the pupil part, while fixing I₁ at 50 [lux] and I₂ at 500 [lux]. Also as the ambient light in this case, light emitted from white LEDs was used.

The item of "No glare" in Table 3 was evaluated in accordance with the same criteria as those in Table 1.

**[Table 3]**

| | Example C1 | Example C2 | Example C3 | Example C4 | Example C5 |
|---|---|---|---|---|---|
| I₃/I₁ | 2 | 3 | 5 | 10 | 15 |
| No glare | A | A | B | B | C |

For adjusting various illuminance values (numerical value ranges) as described above, functions of the illuminance adjustment unit 5 may be utilized. That is, if illuminance around the head is excessively high, the illuminance adjustment unit 5 may attain desired illuminance of the ambient light by shielding the head from the light emitted from the light source around the head. On the other hand, if the illuminance around the head is excessively low, the illuminance adjustment unit 5 may attain the desired illuminance of the ambient light by emitting appropriate light.

In an exemplary aspect, the imager 2 detects the illuminance of the ambient light at the existing position of the head, and the illuminance control unit 335 of the information processing unit 3 may control the illuminance adjustment unit 5 based on this detected illuminance. Incidentally, the detection of the illuminance of the ambient light may be executed by a component other than from that of the imager 2. For example, a predetermined sensor (not shown in FIG. 1) connected to the information processing unit 3 detects the illuminance at the existing position of the head, and the illuminance control unit 335 of the information processing unit 3 may control the illuminance adjustment unit 5 based on this detected illuminance.

In addition, the imager 2 detects the illuminance of the ambient light at the existing position of the head, and a degree of output of a project image to be projected by the projector 4 may be adjusted as appropriate, based on the detected illuminance. That is, if the projector 4 is a projection equipment, the illuminance of the base part may be controlled within an appropriate range by adjusting output of this projection equipment. In addition, the value of I₃ /I₁ may be controlled by adopting a color with a high light shielding property to the masking part that corresponds to the eye area in the projection image to be projected by the projector 4.

Other than the above, in order to further moderate glare felt by the person P1, the person P1 may wear light-dimming contact lenses.

### 3. Conclusion

Accordingly, in the simulation system 1 of the first embodiment, meanwhile the predetermined projection image is projected onto the head, the one or more object parts include the part masking the eye area that is included in the head. That is, since this masking part functions to moderate the glare that is emitted during this projection, the masking part can be allowed to follow movement of the head appropriately by the reduction of the latency time, whereby an effect for moderating the glare can be exhibited significantly.

From this point of view, the simulation system that is less likely to cause glare while being used for the simulation can be realized.

### [Second embodiment]

Subsequently, a simulation system of a second embodiment will be explained. Incidentally, the explanation of this second embodiment will focus on differences from the simulation system of the first embodiment, and explanation on the same matters will be omitted.

That is, the simulation system of the second embodiment is as follows.

A simulation system configured to project a projection image onto a head of a living being,
the simulation system comprising:
an imager configured to consecutively obtain captured images that contain the head in a time series;
an information processing unit configured to calculate predetermined information related to the head based on the captured image, and to generate a projection image to be projected, wherein
   the predetermined information includes a position, a shape and a projected aspect of the head, and
   the projection image to be projected includes a base part and one or more object parts; and
a projector configured to project the projection image generated by the information processing unit in accordance with the position of the head, based on the predetermined information, wherein,
where illuminance of ambient light at an existing position of the head is denoted by I₁ [lux], and illuminance of the base part in the projection image to be projected is denoted by I₂ [lux], I₂ / I₁ is 1.5 or more and 30 or less.

That is, the simulation system of the second embodiment includes the imager 2, the information processing unit 3 and the projector 4 similarly to the simulation system 1 of the first embodiment, but it is arbitrary whether the one or more object parts, which are included in the projection image generated by the information processing unit 3, includes the part masking the eye area in the head or not, and whether the latency is 50 ms or less or not.

Whereas, in the simulation system of the second embodiment, it is essential that I₂ / I₁ is 1.5 or more and 30 or less (the same condition is applied to the simulation method in the second embodiment).

By setting such an appropriate range for I₂ / I₁ as described above, the simulation system that is less likely to cause glare while being used for simulation can be realized also in the second embodiment.

### [Modified example]

Other than the above, a following aspect may be adopted to the simulation system 1.

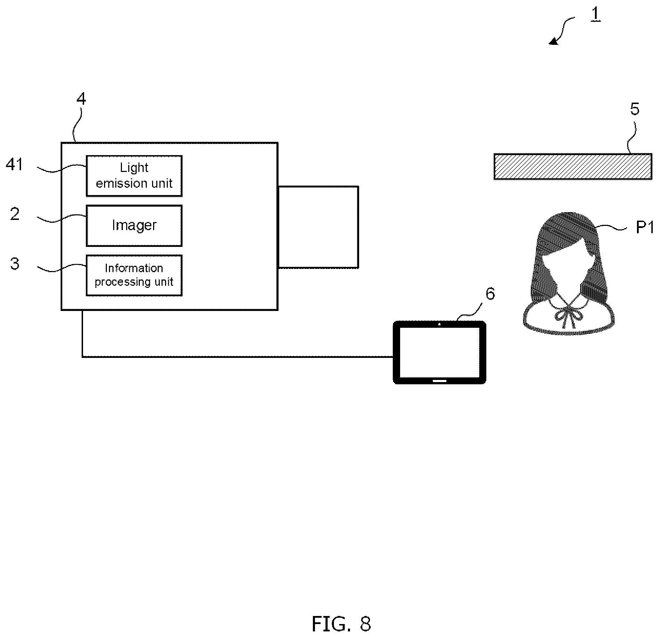

FIG. 8 is a configuration diagram representing a first modified example of the simulation system 1. In the embodiments described above, the imager 2, the information processing unit 3 and the projector 4 are independent to each other, but the imager 2 and the information processing unit 3 may be integrated into the projector 4 as in the simulation system 1 shown in FIG.
8. In other words, a high-speed and high-functional projection equipment which is integrally provided with the functions of the imager 2, the information processing unit 3 and the projector 4 may be implemented.

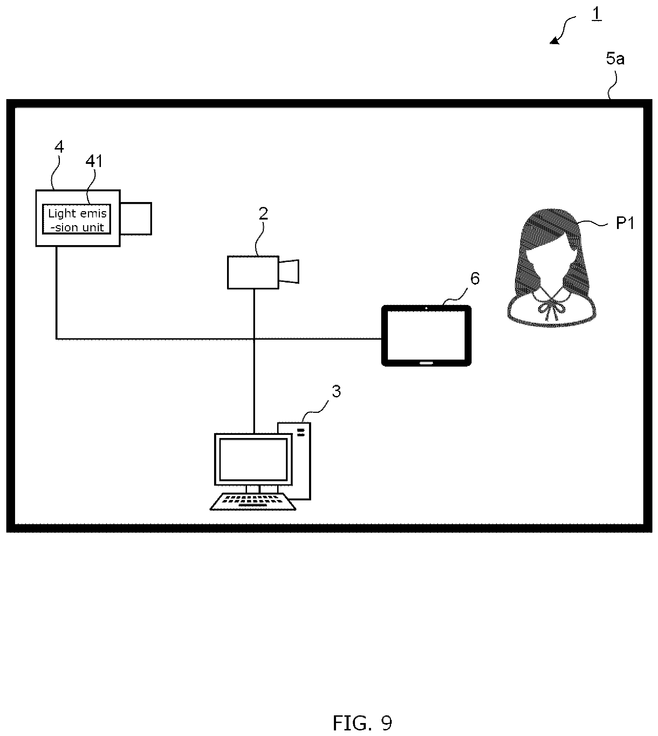

FIG. 9 is a configuration diagram representing a second modified example of the simulation system 1. In the above-described embodiments, the illuminance adjustment unit 5 is explained as the arcade-shaped member that exists near the person P1, but the member may be arranged so as to surround the person P1, the imager 2, the information processing unit 3 and the projector 4, like a illuminance adjustment unit 5a in FIG.
9. In other words, a booth surrounding the person P1, the imager 2, the information processing unit 3 and the projector 4 may be configured by the illuminance adjustment unit 5a, and the person P1 may execute the simulation in this booth.

In the embodiments described above, the information processing unit 3 is described as a computer having the predetermined functions, but the information processing unit 3 may be a control circuit that converts the information imaged by the imager 2 into a predetermined signal and transmits the signal to the projector 4.

In the embodiments described above, a part to be projected include a head of a living being, but such a head is not necessarily required to be included in the modified examples. For example, the projection part may be a body, hands, legs or the like of a living being. In such an aspect, simulations of clothes, an avatar, manicures and pedicures can be performed.

Further, the embodiments described above may also be provided in each of the aspects described below.
(1) A simulation system configured to project a projection image onto a head of a living being, the simulation system comprising: an imager configured to consecutively obtain captured images that contain the head in a time series; an information processing unit configured to calculate predetermined information related to the head based on the captured image, and to generate a projection image to be projected, wherein the predetermined information includes a position, a shape and a projected aspect of the head, the projection image to be projected includes a base part and one or more object parts, and the one or more object parts include a part masking an eye area that is included in the head; and a projector configured to project the projection image generated by the information processing unit in accordance with the position of the head, based on the predetermined information, wherein a time period from a time of a frame when the imager images the head to a time when the projector projects the projection image onto the head, during which the information processing corresponding to this frame is performed, is 50 ms or less.
(2) The simulation system according to (1), wherein, where illuminance of ambient light at an existing position of the head is denoted by I₁ [lux], and illuminance of the base part in the projection image to be projected is denoted by I₂ [lux], I₂ / I₁ is 1.5 or more and 30 or less.
(3) The simulation system according to (2), wherein the I₁ is 5 or more and 500 or less.
(4) The simulation system according to (2) or (3), wherein, where illuminance of an area corresponding to a pupil part in the projection image to be projected by the projector is denoted by I₃ [lux], I₃ / I₁ is 10 or less.
(5) The simulation system according to any one of (1) to (4), further comprising an illuminance adjustment unit configured to adjust illuminance of ambient light at the existing position of the head by a member that is arranged around the head.
(6) The simulation system according to any one of (1) to (5), wherein the imager is a camera with an operating frequency of 300 fps or more.
(7) The simulation system according to any one of (1) to (6), wherein the information processing unit calculates the predetermined information by using a predetermined area centered around the position of the head calculated from a previous frame of the captured image that is immediately precedes a present frame.
(8) The simulation system according to any one of (1) to (7), wherein the projector is a projection equipment with an operating frequency of 300 Hz or more.
(9) The simulation system according to any one of (1) to (8), the simulation system being configured to simulate makeup onto the head.
(10) The simulation system according to (9), further comprising a makeup input device, wherein the information processing unit is configured to output contents of the one or more object part based on an input into the makeup input device.
(11) A simulation system configured to project a projection image onto a head of a living being, the simulation system comprising: an imager configured to consecutively obtain captured images that contain the head in a time series; an information processing unit configured to calculate predetermined information related to the head based on the captured image, and to generate a projection image to be projected, wherein the predetermined information includes a position, a shape and a projected aspect of the head, and the projection image to be projected includes a base part and one or more object parts; and a projector configured to project the projection image generated by the information processing unit in accordance with the position of the head, based on the predetermined information, wherein, where illuminance of ambient light at an existing position of the head is denoted by I₁ [lux], and illuminance of the base part in the projection image to be projected is denoted by I₂ [lux], I₂ / I₁ is 1.5 or more and 30 or less.
(12) A simulation method using a simulation system configured to project a projection image onto a head of a living being, the simulation method comprising: an imaging step of consecutively obtaining captured images that contain the head in a time series; an information processing step of calculating predetermined information related to the head based on the captured image, and generating a projection image to be projected, wherein the predetermined information includes a position, a shape and a projected aspect of the head, the projection image to be projected includes a base part and one or more object parts, and the one or more object parts include a part masking an eye area that is included in the head; and a projection step of projecting the projection image generated in the information processing step in accordance with the position of the head, based on the predetermined information, wherein a time period from a time of a frame when imaging the head in the imaging step to a time when projecting the projection image onto the head in the projection step, during which the information processing corresponding to this frame is performed, is 50 ms or less.
(13) A simulation method using a simulation system configured to project a projection image onto a head of a living being, the simulation method comprising: an imaging step of consecutively obtaining captured images that contain the head in a time series; an information processing step of calculating predetermined information related to the head based on the captured image, and generating a projection image to be projected, wherein the predetermined information includes a position, a shape and a projected aspect of the head, and the projection image to be projected includes a base part and one or more object parts; and a projection step of projecting the projection image generated in the information processing step in accordance with the position of the head, based on the predetermined information, wherein, where illuminance of an area corresponding to a pupil part in the projection image to be projected by the projector is denoted by I₃ [lux], I₃ / I₁ is 10 or less.

Needless to say, the present disclosure is not limited to the above description.

Various embodiments of the present disclosure have been described above, but these are presented as examples and are not intended to limit the scope of the disclosure. Novel embodiments can be implemented in various other forms, and various omissions, replacements, and modifications can be made within the scope of the spirit of the disclosure. The embodiments and its modifications are included in the scope and the spirit of the disclosure and are included in the scope of the invention described in claims and the equivalent scope thereof.

### [Description of Sign]

1: simulation system
2: imager
3: information processing unit
4: projector
5, 5a: illuminance adjustment unit
6: makeup input device
30: communication bus
31: communication unit
32: storage unit
33: control unit
41: light emission unit
60: communication bus
61: communication unit
62: storage unit
63: control unit
64: display unit
65: input unit
331: imaging control unit
332: projection control unit
333: arithmetic unit
334: input reception unit
335: illuminance control unit
BS1: base part
D: display screen
IMG1: projection image
OBJ11 to OBJ14: object part
OBJ21 to OBJ23, OBJ21a, OBJ21b: object
P1: person

## Claims

1. A simulation system configured to project a projection image onto a head of a living being,
the simulation system comprising:
an imager configured to consecutively obtain captured images that contain the head in a time series;
an information processing unit configured to calculate predetermined information related to the head based on the captured image, and to generate a projection image to be projected, wherein
the predetermined information includes a position, a shape and a projected aspect of the head,
the projection image to be projected includes a base part and one or more object parts, and
the one or more object parts include a part masking an eye area that is included in the head; and
a projector configured to project the projection image generated by the information processing unit in accordance with the position of the head, based on the predetermined information, wherein
a time period from a time of a frame when the imager images the head to a time when the projector projects the projection image onto the head, during which the information processing corresponding to this frame is performed, is 50 ms or less.

2. The simulation system according to claim 1, wherein,
where illuminance of ambient light at an existing position of the head is denoted by I₁ [lux], and illuminance of the base part in the projection image to be projected is denoted by I₂ [lux], I₂ / I₁ is 1.5 or more and 30 or less.

3. The simulation system according to claim 2, wherein the I₁ is 5 or more and 500 or less.

4. The simulation system according to claim 2 or 3, wherein,
where illuminance of an area corresponding to a pupil part in the projection image to be projected by the projector is denoted by I₃ [lux], I₃ / I₁ is 10 or less.

5. The simulation system according to any one of claims 1 to 4, further comprising an illuminance adjustment unit configured to adjust illuminance of ambient light at the existing position of the head by a member that is arranged around the head.

6. The simulation system according to any one of claims 1 to 5, wherein
the imager is a camera with an operating frequency of 300 fps or more.

7. The simulation system according to any one of claims 1 to 6, wherein
the information processing unit calculates the predetermined information by using a predetermined area centered around the position of the head calculated from a previous frame of the captured image that is immediately precedes a present frame.

8. The simulation system according to any one of claims 1 to 7, wherein
the projector is a projection equipment with an operating frequency of 300 Hz or more.

9. The simulation system according to any one of claims 1 to 8,
the simulation system being configured to simulate makeup onto the head.

10. The simulation system according to claim 9, further comprising a makeup input device, wherein
the information processing unit is configured to output contents of the one or more object part based on an input into the makeup input device.

11. A simulation system configured to project a projection image onto a head of a living being,
the simulation system comprising:
an imager configured to consecutively obtain captured images that contain the head in a time series;
an information processing unit configured to calculate predetermined information related to the head based on the captured image, and to generate a projection image to be projected, wherein
the predetermined information includes a position, a shape and a projected aspect of the head, and
the projection image to be projected includes a base part and one or more object parts; and
a projector configured to project the projection image generated by the information processing unit in accordance with the position of the head, based on the predetermined information, wherein,
where illuminance of ambient light at an existing position of the head is denoted by I₁ [lux], and illuminance of the base part in the projection image to be projected is denoted by I₂ [lux], I₂ / I₁ is 1.5 or more and 30 or less.

12. A simulation method using a simulation system configured to project a projection image onto a head of a living being,
the simulation method comprising:
an imaging step of consecutively obtaining captured images that contain the head in a time series;
an information processing step of calculating predetermined information related to the head based on the captured image, and generating a projection image to be projected, wherein
the predetermined information includes a position, a shape and a projected aspect of the head,
the projection image to be projected includes a base part and one or more object parts, and
the one or more object parts include a part masking an eye area that is included in the head; and
a projection step of projecting the projection image generated in the information processing step in accordance with the position of the head, based on the predetermined information, wherein
a time period from a time of a frame when imaging the head in the imaging step to a time when projecting the projection image onto the head in the projection step, during which the information processing corresponding to this frame is performed, is 50 ms or less.

13. A simulation method using a simulation system configured to project a projection image onto a head of a living being,
the simulation method comprising:
an imaging step of consecutively obtaining captured images that contain the head in a time series;
an information processing step of calculating predetermined information related to the head based on the captured image, and generating a projection image to be projected, wherein
the predetermined information includes a position, a shape and a projected aspect of the head, and
the projection image to be projected includes a base part and one or more object parts; and
a projection step of projecting the projection image generated in the information processing step in accordance with the position of the head, based on the predetermined information, wherein,
where illuminance of an area corresponding to a pupil part in the projection image to be projected by the projector is denoted by I₃ [lux], I₃ / I₁ is 10 or less.
